# EUROPEAN PATENT APPLICATION

(11) **EP 0 551 790 A1**
(43) Date of publication of application: **21.07.1993**
(21) Application number: 92810029.6
(22) Date of filing: 17.01.1992
(51) Int. Cl.: F16L 55/165

(54) **A method of curing a heat curable substance contained in a pipe liner and apparatus and pipe liner for carrying out this method**

(71) Applicant: Mitchell, David Campbell, CH-1255 Veyrier Geneva (CH)
(72) Inventor: Mitchell, David Campbell, CH-1255 Veyrier Geneva (CH)
(74) Representative: Denmark, James

(57) **Abstract**

A pipe (1) is lined by inverting a sleeve (2) of polyester felt (3) impregnated with a polyester resin. The sleeve (2) is then hardened by curing the resin. Instead of using hot water as is done at present, iron filings are incorporated in the resin and are caused to heat by an alternating magnetic field to cure the resin. The field is generated by annular electromagnetic means (14) borne by a core member (10) drawn by a cable (12) through the pipe (1) and tube (2). The invention is of particular interest in mending leaky sewer pipes and the like as the presence of flowing liquid or other matter does not affect the magnetic field.

## Description

### BACKGROUND

To prevent leakage from a sewer pipe, there is currently in use a method, developed by Insituform Group Ltd (Isle of Man), of providing such a pipe with an internal lining, which consists in inverting a sleeve of polyester felt, impregnated with a polyester resin, within the pipe, and then internally heating the sleeve with hot water to cure the resin and render the pipe lining hard.

The heating of the water in the pipe requires much energy, especially in larger diameter pipes and pipes running under water, e.g. in lakes, rivers and the sea.

### SUMMARY

An object of the invention is to reduce the amount of energy required for the hardening of this kind of pipe liner.

Another object of the invention is to enable a sewer or other liquid conveying pipe to be lined while in use without the curing action being appeciably affected by flowing sewage or other liquid or matter.

To these and other ends, the invention provides a method of curing a heat-curable substance contained in a pipe liner, apparatus for use in the method, and a pipe liner suitable for the method, as set forth in the following claims.

### DRAWINGS

One embodiment will now be described in greater detail with reference to the accompanying diagrammatic drawings in which :
Figures 1 and 3 are respectively a cross-section along line I-I of Figure 3 and an axial section along line III-III of Figure 1 of a round concrete pipe 1 and of a sleeve-like liner 2 according to the invention provided in pipe 1, and showing also, partly in axial section in Figure 3, apparatus 10 according to the invention used during a pipe lining operation; and
Figure 2 is a sectional view on an enlarged scale of a portion of the liner 2 shown in Figures 1 and 3.

### DETAILED DESCRIPTION

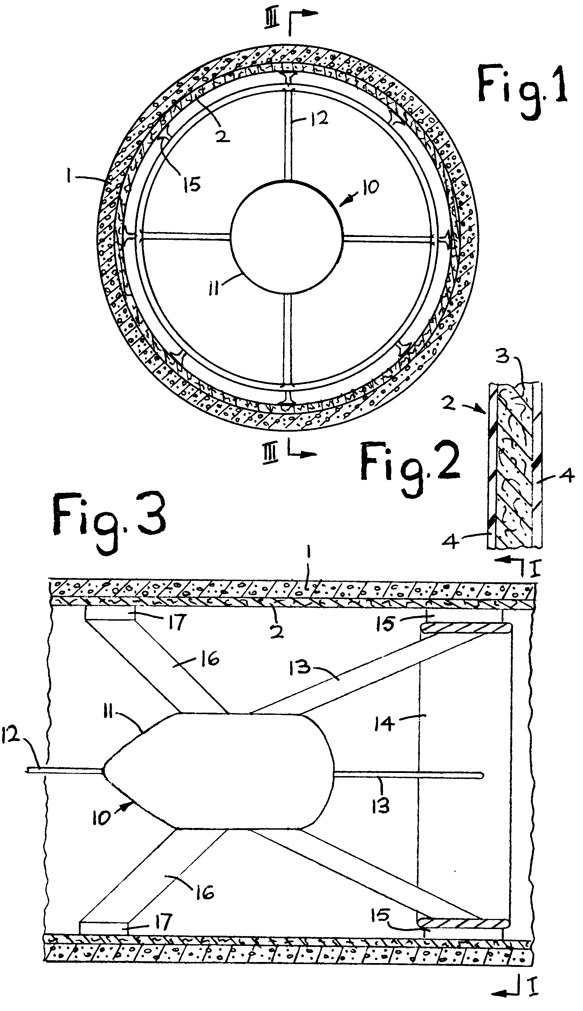

The sleeve-like liner 2 of Figures 1 to 3 comprises a layer of fibrous material 3, e.g. polyester or other felt, that is impregnated with polyester resin or other suitable heat-curable substance and which contains magnetizable matter capable of being caused to heat by a magnetic field.

To prevent liquid or other extraneous matter from coming into contact with the above constituents of liner 2, the latter is clad on one or both sides with sheeting 4 that is impermeable to liquid and/or dust, e.g. polyethylene sheeting.

The magnetizable matter is preferably incorporated in the resin and may consist of particles of a suitable ferromagnetic material, e.g. iron filings. Alternatively, the magnetizable matter may be added to the fibrous material 3 separately from the resin, or may be incorporated in one or both cladding sheets 4.

After liner 2 has been put in place in pipe 1 in known manner, as by inversion, the magnetizable matter is caused to heat with the aid of the apparatus 10.

Apparatus 10 comprises a core member 11 to the front end of which is secured a wire or cable 12 for drawing the apparatus along a pipe 1. From the rear end portion of core member 11 project a set of radial and rearwardly inclined spacer arms 13 supporting at their outer ends an annulus 14 consisting either of a single ring-like electromagnet or of a ring-like arrangement of electromagnets such as to form, in operation, an unbroken annular magnetic field.

The coil(s) of the electromagnet(s) is(are) supplied from the core member 11 with a varying, preferably alternating, current fed along conductors in one or more of arms 13. The core member 11 is in turn supplied from an external source with current by a conductor associated with the wire or rope 12. This latter current may be fed directly to the coil(s), if suitable, or, if not, may be appropriately modified by means, not shown, contained in the core member 11, e.g. to increase the alternations and/or modify the voltage. Such means would for instance include a transformer for converting say 220V at 50 Hz to say 5-10V at 50 Hz followed by a phase lock loop (PLL), e.g. a MC 4046, able to multiply the input of 50 Hz by a factor N set by an adjustable electronic counter acting on the PLL to increase the frequency to the required value, e.g. 30 MHz. Such means being known they will not be described in greater detail here.

Upon the coil(s) being energized, a magnetic field is generated that penetrates the liner 2 through the adjacent sheeting 4 to magnetize the magnetizable matter in the liner. By varying the field at an appropriate rate, as by current alternated at a corresponding rate, the magnetizable matter is activated and caused to heat, thereby heating the heat-curable substance in the liner 2 and causing the latter to harden. The rate at which the field should vary will depend on a number of parameters, such as the speed at which apparatus 10 travels along pipe 1 and liner 2, the strength of the field and the distance of the coil(s) from the magnetizable matter.

To ensure even hardening of the liner 2, the coil(s) is(are) kept equidistant from the latter by skates 15 or the like of non magnetic material arranged at equal intervals around annulus 14 and engaging the adjacent sheeting 4 of liner 2.

As the action of the magnetic field would be substantially unimpeded by liquid or other matter flowing in pipe 1, the apparatus 10 can be used without having first to stop or interrupt such a flow. Should the pipe have a relatively low diameter, say 8 inches or so, the amount of space available for the flow of liquid could be too restricted. This possible difficulty can be obviated by the rearward inclination of spacer arms 13, allowing the annulus 14 to be located behind core member 11 and enabling more space to be provided around the latter.

To prevent this rearward shift of annulus 14 from causing apparatus 10 to tilt and become wedged in pipe 1 under the sagging action of the core member 11, the latter is provided on its forward portion with a further set of radial arms 16 that are fitted at their free ends with skates 17 or the like for engagement with liner 2. Arms 16 are preferably forwardly inclined so as not to reduce the flow space round core member 11 and provide a better overall weight distribution.

The skates 15 and 17 are preferably adjustable in the radial direction as by being telescopically constructed to enable the apparatus 10 to be adapted to different pipe sizes. They are furthermore preferably resiliently mounted so that they may adjust, during operation of the apparatus, to any slight diameter variations along liner 2.

Pipe 1 may be made of some other non-magnetic material, e.g. plastic, or be of magnetic material, e.g. iron. In this latter event it would then be possible to dispense with the magnetizable matter in liner 2 as the magnetic field created by the electromagnetic means associated with annulus 14 would cause the magnetic material on the inside of the pipe to heat after passing through the liner, the heat generated in the pipe being then transmitted by conduction to the resin in the liner. A similar result can also be achieved with a pipe made of non-magnetic material, internally coated with a layer of magnetizable material.

The apparatus 10 described above is intended for round pipes but can of course be modified to work in non round, e.g. oval, pipes by appropriately modifying the the shape of the annulus 14 and by relocating arms 13 and 16 and adapting their length.

When no liquid or other matter is flowing along a pipe having to be lined, no or little space need be present between the core member and the coil(s),in which case the coil or coils can be arranged around the core member or annularly within the latter. The apparatus can then work in smaller pipes, or a larger core member can be used.

The apparatus is preferably made fluid-tight, particularly when it is expected to be used in liquid conveying pipes.

Where the apparatus or certain parts thereof is/are in need of cooling during operation, suitable water cooling means may be provided that are supplied with water by a tube associated with the wire or cable 12.

The apparatus may of course be modified in a number of other ways to suit particular conditions of operation.

## Claims

1. A method of curing a heat-curable substance, e.g. a polymer resin, contained in a pipe liner, which comprises heating the substance by subjecting magnetizable matter in or adjacent said substance to a varying, e.g. alternating, magnetic field to cause at least some of said matter to heat, and transferring at least some of the resulting heat to said substance to cure the latter.

2. A method as in claim 1, wherein magnetizable matter is in the liner.

3. A method as in claim 1, wherein magnetizable matter is in or on the pipe, adjacent the liner.

4. A method as in any preceding claim, wherein said magnetizable matter is subjected to said field from within the pipe and liner.

5. A method as in any preceding claim, wherein said field is applied circumferentially from within the pipe and liner.

6. A method as in any preceding claim, wherein said field is applied over a predetermined width and is progressively moved along the pipe and liner.

7. Apparatus for curing in a pipe a heat-curable substance, e.g. a polymer resin, contained in a sleeve-like pipe liner, which comprises means arranged to move within and along said pipe and liner for generating a varying, e.g. alternating, magnetic field such as to cause magnetizable matter in or on said pipe or liner to heat and thereby cure by heat transfer said substance.

8. Apparatus as in claim 7, wherein said means include one or more units arranged to be, during operation, adjacent a circumferential band of the inner surface of the liner.

9. Apparatus as in claim 8, wherein said means are borne by a core member to which can be connected a rope or the like for pulling said apparatus along the pipe and liner.

10. Apparatus as in claim 9, wherein said means are energized with a varying, e.g. alternating, current supplied from the core member.

11. Apparatus as in any one of claims 9 and 10, wherein said core member is located substantially centrally in relation to said means and said means are connected to said core member by spacer arms to provide a throughflow passage for liquid and other matter flowing along the pipe and liner.

12. Apparatus as in claim 11, wherein said means are offset in relation to the thickest portion of the core member.

13. A sleeve-like pipe-liner comprising a heat-curable substance, e.g. a polyester resin, and magnetizable matter capable of being caused to heat by a varying, e.g. alternating, magnetic field to cure said substance.

14. A pipe liner as in claim 13, wherein said magnetizable matter is contained in the heat-curable substance.

15. A pipe liner as in any one of claims 13 and 14, wherein said heat-curable substance and said magnetizable matter are contained in fibrous material, e.g. polyester felt.

16. A pipe liner as claimed in any one of claims 13 to 16, having at least one side clad with a coating or sheeting, e.g. of polyethylene, that is impermeable to liquid and/or dust.

17. A pipe liner as claimed in any one of claims 13 to 16, wherein said magnetizable matter is particulate.
